# EUROPEAN PATENT APPLICATION

(11) **EP 0 664 993 A1**
(43) Date of publication of application: **02.08.1995**
(21) Application number: 95830012.1
(22) Date of filing: 19.01.1995
(51) Int. Cl.: A61C 13/00

(54) **Device and process for the production of mobile dental prostheses**

(30) Priority: 28.01.1994 IT RM940040
(71) Applicant: Frisardi, Roberto, I-00193 Roma RM (IT)
(72) Inventor: Frisardi, Roberto, I-00193 Roma RM (IT)
(74) Representative: Tonon, Gilberto

(57) **Abstract**

A device is described for production of movable dental prostheses comprising a polygonal in plan box-like body formed by a lower part, or mould, and by a upper part, or counter-mould, said parts being distinct and separate, hinged to one another along coinciding sides of respective first and second rear walls (2, 2'), at the end sides of each of them are hinged rear sides of respective first and second side walls (3, 4 and 6, 7) capable of moving between a closed position and an open position of said mould and said counter-mould, respectively, the former of which comprises a lower or bottom wall (1), the rear side of which is integral with said first rear wall (2), and the latter of which comprises an upper or cover wall (5), the rear side of which is hinged along the side of said second rear wall (2') opposite to that hinged to said first rear wall (2). Retaining means (8, 9, 10, 11, 12, 13) are provided to hold said walls forming said mould and counter-mould in the closed position, and clamping means (22) are provided to sealingly lock said mould and counter-mould overlying in the closed position. A process is also described for production of a movable dental prosthesis using the device mentioned above.

## Description

The present invention relates to a device and related process for the production of mobile dental prostheses, mobile dental prosthesis being intended to signify those total or partial prostheses that the patient is able to apply and remove at will.

In partial dental prostheses, fixing, or anchoring in the patient's mouth takes place by means of special hook elements that engage with existing natural teeth, whereas in the case of full prostheses said anchoring takes place by adhesion of the base of the prosthesis, containing the artificial teeth, to the underlying gum mucosa.

Having specified the above, it should be noted that in the following description, for ease of illustration, only the total dental prosthesis will be taken into consideration, that is to say a dental prosthesis that replaces all the teeth in an upper or lower dental arch, without prejudice to the fact that the indications given below will be equally valid for partial dental prostheses, that is to say for those dental prostheses that replace only a part of the teeth.

Up to now the system generally adopted to produce a full dental prosthesis comprised the steps of: making a imprint of the dental arch in question without teeth; making a plaster model cast of said imprint; forming a wax model of the base of the prosthesis, that is to say the part resting on the gums, which, if desired or considered convenient, may extend by means of a plate element over part of or the whole of the palate in upper prostheses and over part of the lingual area in lower prostheses; fixing the artificial teeth to said base; introducing said plaster model with said base, with the artificial teeth fixed thereto, into the lower portion or mould of a so-called muffle; filling said mould with plaster up to the lower edge of said wax base; filling the upper part or counter-mould of said muffle with plaster; blocking said counter-mould on said mould and heat melting the wax forming said base, during which step the artificial teeth are kept in position by the plaster of the counter-mould; separating the mould from the counter-mould and removing the melted wax, which is then replaced by polymerizable resin in a pasty state; blocking the counter-mould on the mould once more and proceeding to bake the resin so that it cures by polymerization.

The conventional system for production of dental prostheses described above is not without a number of quite serious problems. In fact, to mention some of the main ones, the time required to obtain a finished version of the product in question is considerable; the use of a notable amount of plaster mixed with water involves a general and somewhat unpleasant dirtying of the apparatus and working area, as both when mixing and when pouring the plaster tends to splash and drip and, at times, flows out of the muffle, which is not provided with a seal; when the resin is inserted (packed) into the muffle, the latter cannot be closed merely by using the strength of the operators, but requires the assistance of another apparatus, called a "press", using which the parts forming the muffle, when joined, cause the excess resin to be pressed out, thus forming a single body; to prevent the mould ad the counter-mould of the muffle from remaining stuck together, it is necessary to apply a thin layer of insulating material to the surface of the mould, and this may filter through the plaster and deposit itself on the teeth fixed in the base; during polymerization, that is to say during the stage in which the resin, by means of the chemical reaction between the liquid (monomer) and the powder (polymer) passes from the plastic phase to the solid phase, said liquid also absorbs a certain amount of plaster, with the result that the resin forming the base of the prosthesis is very opaque and dirty when finished, forcing the dental technician to carry out additional finishing steps which involve a great time consuming to obtain a final product that is not entirely perfect; finally, it is necessary to note the difficulties in extracting the completed prosthesis from the plaster cast, involving, among other things, destruction of the latter.

The aim of the present invention is to provide a device and a process for the production of mobile dental prostheses such as to overcome the above mentioned darwbacks found in similar systems hiterto known.

The device in question substantially comprises a polygonal in plan box-type body made up of a lower part or mould and an upper part or counter-mould hinged to each other along coinciding sides of respective first and second rear walls, and the end sides of each of them being hinged rear sides of respective first and second side walls capable of being moved from a closed position to an open position, respectively, of said mould and counter-mould, of which the former has a lower wall, or bottom , whose rear side is integral with said first rear wall, and the latter has an upper wall, or cover, hinged along the side of said second rear wall opposite to that on which said first rear wall is hinged. There are also provided retaining means to hold said walls forming said mould and counter-mould in the closed position, and clamping means to sealingly lock said mould and counter-mould overlying in the closed position.

The process according to the invention provides for use of said device to form dental prostheses, making use of materials that are more modern and effective than the usual plaster of Paris according to the prior art, in particular elastomeric materials suitably mixed with a specific catalyst. The present invention will be illustrated in greater detail in the following by description of a preferred embodiment thereof, given as a non-limiting example, with reference to the enclosed drawings, in which:

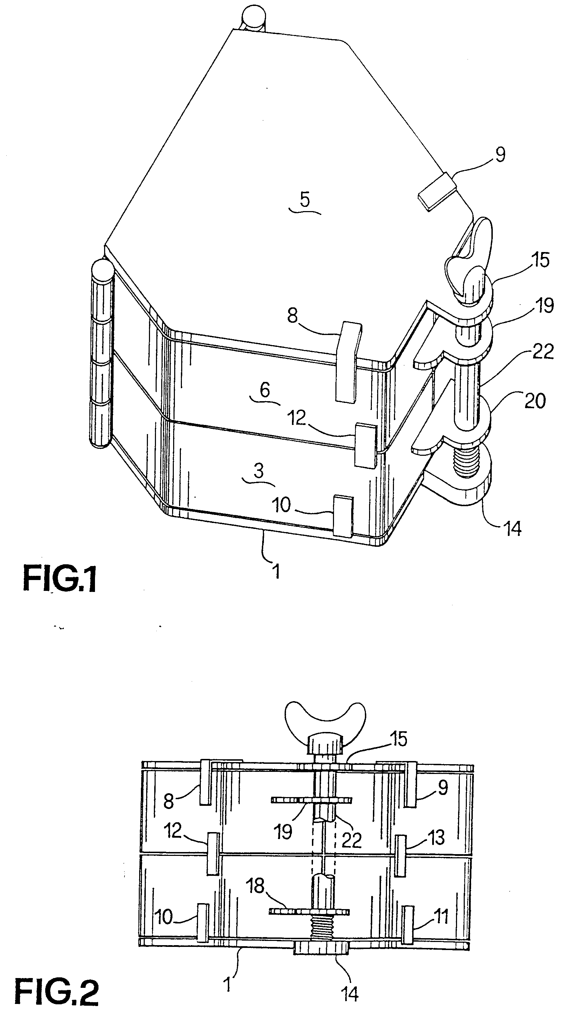

figure 1 is a front and side perspective view of the device according to the invention in a closed position;
figure 2 is a front elevation view of the device according to figure 1;

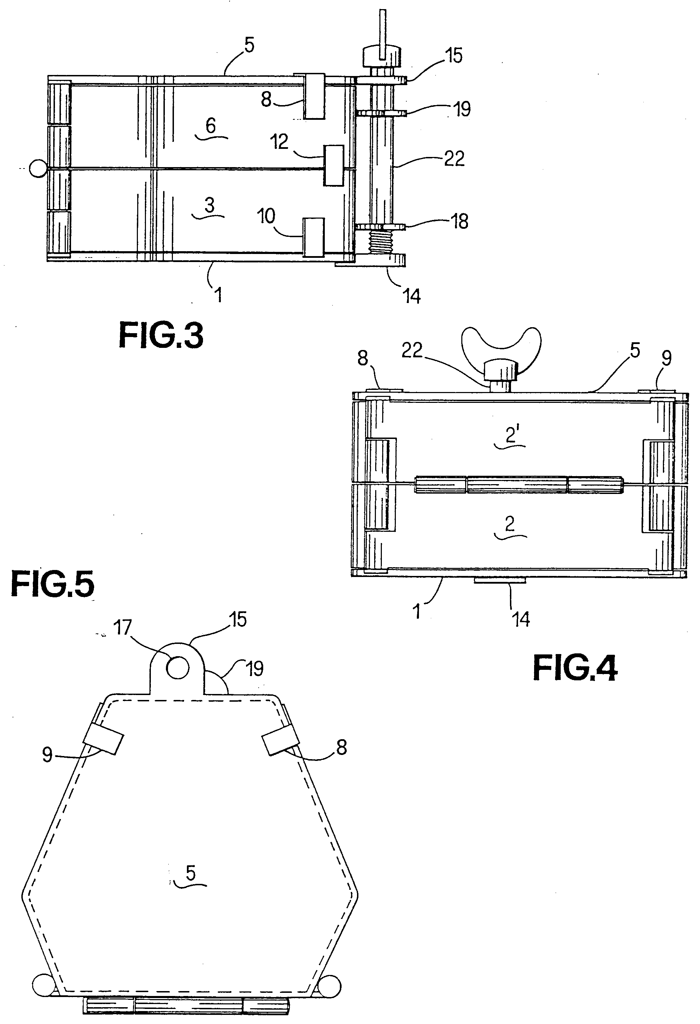

figure 3 is a side elevation view of the device according to figure 1;
figure 4 is a rear elevation view of the device according to figure 1;
figure 5 is a plan view from above of the device according to figure 1; and

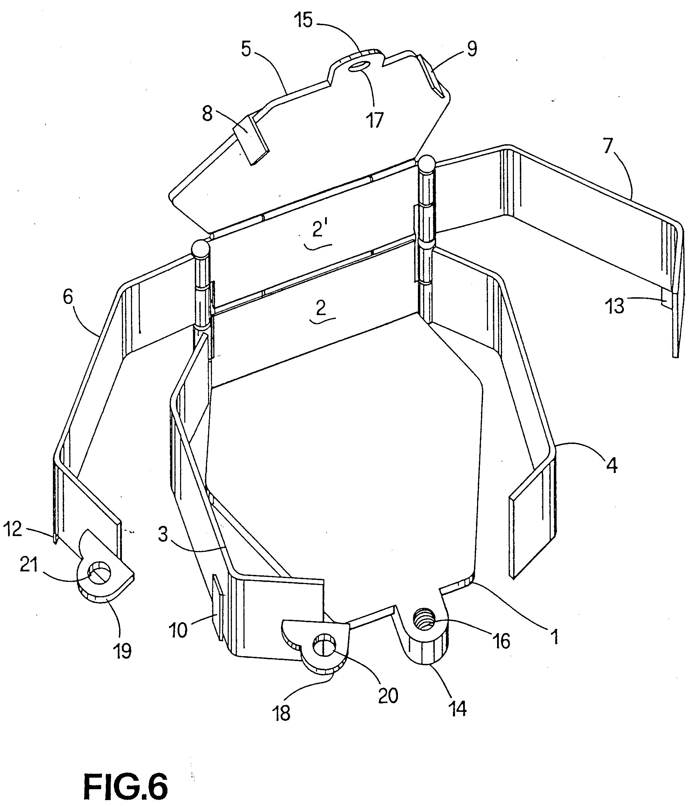

figure 6 is a front perspective view of the device according to figure 1 in an open position.

With reference to the above mentioned figures, the device according to the invention is made up of a box-type body, with a substantially hexagonal plan in the present embodiment, formed by a lower part, or mould, and by an upper part, or counter-mould, which are distinct and separate from each other and are joined together in a movable manner.

Said mould comprises a plate lower or bottom wall 1, the rear side of which is integral with a first rear wall 2, perpendicular to the surface of said bottom wall, to the end sides of which are hinged respective first side walls 3 and 4, appropriately angled in such a way as to adapt to respective outline of the bottom wall 1, so as to form, together with the rear wall 2, the perimetrical wall of said mould, whereas said counter-mould comprises a plate upper or cover wall 5, entirely similar to the bottom wall 1, the rear side of which is hinged to the top side of a second rear wall 2', exactly the same as the one mentioned above, the lower side of which is hinged to the upper side of the first rear wall 2 of said mould, and the end sides of which are hinged to respective second side walls 6 and 7, shaped and operating in the same manner as the first side walls 3 and 4 on the mould, so as to form, together with the second rear wall 2', the perimetrical wall of said counter-mould.

On the front part of opposite sides of the upper wall 5 of the counter-mould two retaining fins 8 and 9 are provided, each of said fins having the shape of an L, one arm of which is fixed to the top surface of said wall, while the other arm extends downward from the respective edge of the latter and additional retaining fins 10, 11 and 12, 13 in the shape of plates are provided on the outer surface of each of the first and second side walls 3, 4 and 6, 7, said fins being arranged in such a way that they project partially downward from the lower edges of the respective of said side walls.

The function of the fin assembly indicated above is to hold the various walls of the device in question in the closed position by engagement of the fins 10 and 11 with the bottom wall 1, of the fins 12 and 13 with the first side walls 3 and 4, and of the fins 8 and 9 with the second side walls 6 and 7; opening of the device is achieved simply after lifting of the top wall 5, thus disengaging the fins 8 and 9 from the side walls 6 and 7 and consequently disengaging all the other fins.

The bottom wall 1 and the upper wall 5 have on their respective front sides a rounded projection 14 and 15, respectively, in which an axial through-bore 16 and 17, respectively, is formed, of which the former is provided with an internal thread, while on the front free end of one of the first side walls, indicated here with 3, and of one of the second side walls, here indicated with 6, are fixed, perpendicular to the surface of said walls and in such a way as to project from the end edge thereof, respective plates 18 and 19, in each of which an axial through-bore 20 and 21, respectively, is formed.

With the device according to the invention in a closed position, said bores 17, 19, 18 and 15, from the top downward, are vertically aligned and are engaged with a wing bolt 22 having a threaded lower part capable of screwing into said thread in the bore 15 to lock the device in an hermetic manner.

The process according to the present invention for production of dental prostheses using the device described above, provides for the steps of: laying a layer of elastomer, for example Optasil or Silaplast, on the upper surface of the bottom wall 1, holding the first side walls 3 and 4 in a closed position manually; placing the wax model, complete with artificial teeth, of the dental prosthesis to be produced on said layer of elastomer; filling said mould with elastomer so as to completely surround the base of said wax model of the prosthesis, with the artificial teeth projecting out from the upper surface of said elastomer on which, if convenient, a thin layer of plaster of Paris may be applied to give greater resistance; spreading the upper surface of the elastomer filling in the mould with a release agent, for example vaseline; filling with said elastomer the counter-mould of said device, holding the second side walls 6 and 7 closed manually; closing said mould and counter-mould in a locked way by fins 8, 9, 10, 11, 12, 13; hermetically clamping said mould and counter-mould so closed and locked, by screwing the threaded end part of the wing bolt 22 into the threaded bore 16 in the projection 14 on the bottom wall 1 of the mould through the through-bores 17, 21, 18, respectively, on the projection 15 from the top wall 5 of the cover and on the end plates 19 and 18 of the side walls 6 and 3; heating the device prepared as above, for example by hot water, in such a way as to melt the wax in said model of the prosthesis, with the artificial teeth remaining in position, fixed in the elastomer of the counter-mould; unscrewing the wing bolt 22, and removing it from the above mentioned bores, then lifting the upper wall 5 of the counter-mould in such a way as to unlock the device and allow it to be opened simply by rotation outward of the first and second side walls 3, 4, 6, 7, in such a way as to enable the block of elastomer formed by the part relating to the mould and the part relating to the counter-mould to be removed with ease; separating said two parte of the block of elastomer, thanks to the release agent applied previously; removing the melted wax and packing all the empty spaces in the mould part and in the counter-mould part of the block of elastomer with heat-polymerizable resin; after reinserting said block of elastomer in the device, re-sealing the mould and the counter-mould in the manner described above; heating the device once again, for example in a hot air oven or in a microwave oven, to polymerize said resin so as to obtain the required hardness thereof; opening the device again, after cooling, in the manner described above in order to remove the block of elastomer once again and separate it into the two parts mentioned above, so that in the mould part is found the desired finished dental prosthesis, practically ready for use, which can be extracted with ease leaving intact both the block of elastomer and the relating imprint of the prosthesis therein, so that it can be used again should it be necessary to make a second or more than one other prosthesis similar to the first one.

Among the many and surprising advantages that can be obtained using the device and process according to the present invention, as compared with conventional ones used to date, it is possible to mention: considerable reduction in operating times; simpler and easier operating procedures; elimination of the diffifuclties relating to extraction of the block of material containing the finished prosthesis from the device, which in similar conventional devices can involve the risk of damaging the latter, thanks to the opening of the first and second side walls, respectively, of the mould and counter-mould by rotation around their respective hinges; elimination of mess in the working area and on the relative apparatus, caused in prior art systems by splashes and scattering of plaster; elimination of the cleaning and special finishing operations on the finished prosthesis due to infiltration of plaster into the resin and to the possible deposit of insulating material on the artificial teeth; elimination of the excess resin thanks to the sealed closing of the device in object; savings in material.

Finally, it should be noted that a particularly advantageous and important aspect of the device and the process according to the present invention lies in the fact that it enables a second or more than one other dental prostheses similar to the first one to be made using the same mould and counter-mould used to produce the first prosthesis, as said block of elastomer, made up, as stated above, of the mould part and the counter-mould part which can be separated from each other with ease, remains absolutely whole, thus preserving the imprint of the prosthesis required, which would not be possible using conventional devices and methods, where, in order to extract the finished prosthesis, it is necessary to break the plaster cast, so that when a similar spare prosthesis is desired, as is usually the case, it is necessary to repeat all the steps required to make the first one, resulting in a considerable increase in cost and work.

The present invention is not limited to the embodiment described above, but comprises any execution variation thereof.

## Claims

1. A device for the production of movable dental prostheses, characterized in that it comprises: a box-shaped body made up by a lower part, forming the mould, and by an upper part, forming the counter-mould, hinged to each other, said mould comprising a lower, or bottom wall (1) and said counter-mould comprising an upper, or cover wall (5) and both being provided with respective side walls (3, 4 and 6, 7) that can move from a closed position to an open position; retaining means (8, 9, 10, 11, 12, 13) capable of holding said walls forming said mould and said counter-mould in the closed position; clamping means (22) capable of sealingly locking said mould and said counter-mould together overlying in the closed position.

2. A device according to claim 1, characterized in that said mould comprises: said bottom wall (1), having a polygonal shape, the rear side of which is integral with a first vertical rear wall (2) and two first side walls (3, 4) shaped so as to adapt to the respective outline of said bottom wall (1), each of which is hinged to a respective end side of said rear wall (2), and said counter-mould comprises: said cover wall (5), having the same shape as said bottom wall (1), the rear side of which is hinged to the top side of a second rear wall (2'), the lower edge of which is hinged to the top side of said first rear wall (2) of said mould, and two second side walls (6, 7) shaped in the same manner as said two first side walls (3, 4) of said mould.

3. A device according to claims 1 or 2, characterized in that said retaining means comprise first fin elements (8, 9) extending downward from respective edge parts of said cover plate (5) and capable of engaging with the external surface of respective said second side walls (6, 7) of said counter-mould in the closed position; second fin elements (12, 13) extending downward from the lower edge of respective said second side walls (6, 7) of said counter-mould and capable of engaging with the external surface of respective said first side walls (3, 4) of said mould in the closed position; and third fin elements (10, 11) extending downward from the lower edge of respective said first side walls (3, 4) of said mould and capable of engaging respectively with perimetrical edge parts of said bottom wall (1) in the closed position.

4. A device according to one or more of the preceding claims, characterized in that said locking means are formed by a wing bolt (22) whose stem, the lower end part of which is threaded, is capable of being inserted through through-bores (17, 21, 20), each of which is formed in a projecting part (15, 19, 18), projecting from the front side of said cover wall (5), from the free front end of at least one of said second side walls (6, 7) and from the free front end of at least one of said first side walls (3, 4), respectively, to engage with a thread formed on the inside of a bore (16) made in a projecting part (14) on the front side of said bottom wall (1), all said bores (17, 21, 20, 16) being vertically aligned when said mould and said counter-mould are in the closed position.

5. A process for producing movable dental prostheses using the device according to the preceding claims, characterized in that it comprises the steps of: laying a layer of elastomer on the upper surface of the bottom wall (1) of said mould, temporarily holding the first side walls (3, 4) in a closed position; placing the wax model, complete with artificial teeth, of the dental prosthesis to be produced on said layer of elastomer; filling said mould with elastomer so as to completely surround the base of said wax model of the prosthesis, with the artificial teeth projecting out from the upper surface of said elastomer; filling with said elastomer the counter-mould of said device, temporarily holding siad second side walls (6, 7) closed; closing said mould and counter-mould so that they are locked by said retaining means (8, 9, 10, 11, 12, 13); hermetically clamping on said mould and counter-mould overlying, so closed and locked, by means of said clamping means (22); heating said device so prepared in such a way as to melt the wax in said model of the prosthesis, with the artificial teeth remaining in position, fixed in the elastomer of the counter-mould; releasing said clamping means and said retaining means in such a way as to allow the device to be opened by rotation outward of said first and second side walls (3, 4, 6, 7), in such a way as to open said mould and counter-mould and remove the block of elastomer formed by the part relating to the mould and the part relating to the counter-mould; separating said two parts of the block of elastomer; removing the melted wax and packing all the empty spaces in the mould part and in the counter-mould part of the block of elastomer with heat-polymerizable resin; re-sealing the mould and the counter-mould in the manner described above; heating the device once again to polymerize said resin so as to obtain the required hardness thereof; opening said mould and counter-mould again, after cooling, in the manner described above in order to remove the block of elastomer and separate it into the two parts mentioned above, so that in the mould part is found the finished dental prosthesis, practically ready for use, which can be extracted with ease leaving intact both the block of elastomer and the relating imprint of the prosthesis therein, so that it can be used again should it be necessary to make at least one other similar prosthesis.

6. A process according to claim 5, characterized in that it comprises the additional step of adding on the upper surface of said elastomer contained in said mould a thin layer of plaster of Paris in order to confer greater resistance.

7. A process according to claims 5 or 6, characterized in that it further comprises the step of spreading a release agent on the upper surface of said elastomer contained in said mould, in order to facilitate said separation of the part relating to the mould from the part relating the counter-mould of said block of elastomer.
